# EUROPÄISCHE PATENTSCHRIFT

(11) **EP 0 988 919 B1**
(45) Veröffentlichungstag und Bekanntmachung des Hinweises auf die Patenterteilung: **29.10.2003**
(21) Anmeldenummer: 98117901.3
(22) Anmeldetag: 22.09.1998
(51) Int. Cl.: B23K 35/02, B23K 35/22, B23K 35/32, C04B 37/02

(54) **Siebdruck- oder dispensierfähige Aktivhartlotpasten und Verfahren zu deren Herstellung**
Screen printable and dispensable active brazing paste and its method of manufacturing
Pâte pour le brassage actif apte à la distribution et à la sérigraphie et procédé de sa fabrication

(43) Veröffentlichungstag der Anmeldung: 29.03.2000
(73) Patentinhaber: Endress + Hauser GmbH + Co.KG., 79689 Maulburg (DE); Fraunhofer-Gesellschaft für angewandte Forschung e.V., 80636 München (DE)
(72) Erfinder: Hegner, Frank, Dr., 79539 Lörrach (DE); Schmidt, Elke Maria, 79650 Schopfheim (DE); Eicher, Theophil, Prof. Dr., 66123 Saarbrücken (DE); Otschick, Peter, Dr., 01728 Possendorf (DE); Schaffrath, Winfried, Dr., 01307 Dresden (DE)
(74) Vertreter: Andres, Angelika

(56) Entgegenhaltungen:
- EP-A- 0 331 500
- EP-A- 0 625 403
- EP-A- 0 835 716
- DE-A- 4 339 498

## Beschreibung

Die Erfindung betrifft eine siebdruckfähige oder eine dispensierfähige Aktivhartlotpaste zum gegenseitigen Hartverlöten eines ersten Aluminiumoxid-Keramikkörpers mit einem zweiten Aluminiumoxid-Keramikkörper und eine dispensierfähige Aktivhartlotpaste zum Hartverlöten eines Aluminiumoxid-Keramikkörpers mit einem Metall-Körper und Verfahren zu deren Herstellung.

Die Erfindung betrifft ferner ein Verfahren zur Herstellung einer Aktivhartlot-Verbindung zwischen einem ersten Aluminiumoxid-Keramikkörper und einem zweiten Aluminiumoxid-Keramikkörper mittels eines durch Siebdruck auf den ersten Aluminiumoxid-Keramikkörper aufgebrachten ersten Bezirks aus einer Aktivhartlotpaste und eines durch Siebdruck auf den zweiten Aluminiumoxid-Keramikkörper aufgebrachten, mit dem ersten Bezirk deckungsgleichen zweiten Bezirks der Aktivhartlotpaste und ein Verfahren zum Aktivhartlöten eines in einer Bohrung eines Aluminiumoxid-Keramikkörpers eingesteckten Metall-Körpers mittels eines durch Dispensen darauf aufgebrachten Pads einer Aktivhartlotpaste.

In der US-A 50 95 759 ist eine Aktivhartlotpaste zum Hartverlöten eines Aluminiumoxid-Keramik-Körpers mit einer Platin-Elektrode beschrieben, welche Aktivhartlotpaste umfaßt:
- als Aktivhartlot eine 99,5%/0,5%-Mischung aus einem 98%Au/2%Ni-Pulver und einem Pulver von Titanhydrid und
- als organisches Vehikel ein Gel aus 1,25% Hydroxypropylcellulose und 98,75% 1,2-Propandiol,
- wobei die Aktivhartlotpaste zu 90% aus der 99,5%/0,5%-Mischung und zu 10% aus dem Gel besteht.

Dieser Stand der Technik belegt also, daß üblicherweise Aktivhartlotpasten eine Dispersion eines Pulvers der metallischen Partner des Aktivhartlots in einem organischen Vehikel sind. Dieses umfaßt seinerseits ein Polymer in einem Lösungsmittel. Die Partikel des Pulvers sind möglichst gleichverteilt im Vehikel dispergiert und somit innig mit ihm verbunden.

In der US-A 53 34 344 sind verschiedene Zr/Ni/Ti-Legierungen beschrieben, die als Aktivhartlot zum gegenseitigen Hartverlöten eines ersten Aluminiumoxid-Keramikkörpers mit einem zweiten Aluminiumoxid-Keramikkörper geeignet sind. Aus der Legierung werden mittels Melt-Spinning Folien erzeugt, aus denen zum Hartlöten erforderliche Formkörper durch Stanzen hergestellt werden können.

In der EP-A 835 716 sind verschiedene Zr/Fe/Ti/Be-Legierungen beschrieben, die ebenfalls als Aktivhartlot zum gegenseitigen Hartverlöten zweier Aluminiumoxid-Keramikkörper geeignet sind.

In der US-A 54 31 744 ist beschrieben, wie aus derartigen Legierungen hydrierte Pulver hergestellt werden können, die an Luft nicht dehydrieren, also stabil bleiben.

Im Rahmen der Erfindung sind hinsichtlich ihrer Konsistenz zum einen siebdruckfähige und zum anderen dispensierfähige Aktivhartlotpasten von Interesse.

Unter siebdruckfähig ist im Rahmen der Erfindung zu verstehen, daß die Aktivhartlotpaste derart konsistent, viskos und thixotrop sein soll, daß in Form und Dicke vorgebbare, mit Aktivhartlotpaste gefüllte Bezirke vorgegebener Masse mittels üblicher Dickschicht-Siebdruckverfahren auf die Aluminiumoxid-Keramik aufgebracht werden können und daß diese Bezirke nach dem Drucken formbeständig bleiben, also nicht verfließen, d.h. die Aktivhartlotpaste muß ausreichend strukturviskos sein.

Unter dispensierfähig ist im Rahmen der Erfindung zu verstehen, daß die Aktivhartlotpaste derart konsistent, thixotrop und im Vergleich zur für den Siebdruck erforderlichen Viskosität weniger viskos sein soll, daß die Aktivhartlotpaste z.B. aus einer Düse o.ä. am vorgesehenen Ort in Form eines einzelnen Dots mit vorgegebener, begrenzter Masse aufgebracht werden kann, der danach ebenfalls möglichst formbeständig bleiben soll, also möglichst nicht verfließen soll. Selbstverständlich können mehrere Dots nebeneinander zur Bildung von Linien etc. aufgebracht werden.

Eine Aufgabe der Erfindung besteht darin, siebdruckfähige bzw. dispensierfähige Aktivhartlotpasten anzugeben, die besonders gut den Siebdruck- bzw. Dispens-Anforderungen genügen und besonders gut dazu geeignet sind, einen ersten Aluminiumoxid-Keramikkörpers mit einem zweiten Aluminiumoxid-Keramikkörper bzw. einen Aluminiumoxid-Keramikkörper mit einem Metall-Körper hartzuverlöten.

Ferner sollen jeweils unter Verwendung einer Zr/Ni/Ti- oder einer Zr/Fe/Ti/Be-Legierung ein Verfahren zum Herstellen einer Aktivhartlot-Verbindung zwischen einem ersten Aluminiumoxid-Keramikkörper und einem zweiten Aluminiumoxid-Keramikkörper mittels eines durch Siebdruck auf den ersten Aluminiumoxid-Keramikkörper aufgebrachten ersten Bezirks aus einer Aktivhartlotpaste und eines durch Siebdruck auf den zweiten Aluminiumoxid-Keramikkörper aufgebrachten, mit dem ersten Bezirk deckungsgleichen zweiten Bezirks der Aktivhartlotpaste und ein Verfahren zum Aktivhartlöten eines in einer Bohrung eines Aluminiumoxid-Keramikkörpers eingesteckten Metall-Körpers mittels eines durch Dispensen auf dem Aluminiumoxid-Keramikkörper und dem Metall-Körper aufgebrachten Pads einer Aktivhartlotpaste angegeben werden.

Zur Lösung dieser Aufgaben besteht eine erste Variante der Erfindung in einer siebdruckfähigen Aktivhartlotpaste zum gegenseitigen Hartverlöten eines ersten Aluminiumoxid-Keramikkörpers mit einem zweiten Aluminiumoxid-Keramikkörper, die umfaßt:
- als Aktivhartlot ein hydriertes Pulver einer Zr/Ni/Tioder einer Zr/Fe/Ti/Be-Legierung und
- als organisches Vehikel
   -- Poly-(butylmethyl-methacrylat) oder Poly-(n-decylmethacrylat) als Polymer und
   -- das Campher-Ketal des 2,2,4-Trimethylpentan-1,3-diols und/oder 5-Nonyl-methyl-ether als Lösungsmittel für das Polymer.

Zur Lösung der oben genannten Aufgaben besteht eine zweite Variante der Erfindung in einer dispensierfähigen Aktivhartlotpaste zum Hartverlöten eines ersten Aluminiumoxid-Keramikkörpers mit einem zweiten Aluminiumoxid-Keramikkörper oder eines Aluminiumoxid-Keramik-Körpers mit einem Metall-Körper, die umfaßt:
- als Aktivhartlot ein hydriertes Pulver einer Zr/Ni/Tioder einer Zr/Fe/Ti/Be-Legierung und
- als organisches Vehikel eine Mischung von
   -- im Campher-Ketal des 2,2,4-Trimethylpentan-1,3-diols als einem ersten Lösungsmittel gelöstem Poly-(butylmethylmethacrylat) als erstem Mischungspartner und
   -- in 5-Nonyl-methyl-ether als einem zweiten Lösungsmittel gelöstem Poly-(butylmethyl-methacrylat) als zweitem Mischungspartner.

Zur Lösung der oben genannten Aufgaben besteht eine dritte Variante der Erfindung in einem Verfahren zum Herstellen einer siebdruckfähigen Aktivhartlotpaste, die umfaßt:
- als Aktivhartlot ein hydriertes Pulver einer Zr/Ni/Tioder einer Zr/Fe/Ti/Be-Legierung und
- als organisches Vehikel
   -- Poly-(butylmethyl-methacrylat) oder Poly-(n-decylmethacrylat) als Polymer und
   -- das Campher-Ketal des 2,2,4-Trimethylpentan-1,3-diols als Lösungsmittel für das Polymer,
   bei welchem Verfahren nach Lösen des Polymers im Lösungsmittel

- in einem ersten Schritt an Luft oder unter einer Schutzgas-Atmosphäre eine vorgegebene Menge Pulver mit soviel Vehikel vermischt wird, daß gerade alle Partikel des Pulvers vom Vehikel benetzt sind, und
- in einem zweiten Schritt die Partikel des Pulvers an Luft vollständig im Vehikel mechanisch dispergiert werden.

zur Lösung der oben genannten Aufgaben besteht eine vierte Variante der Erfindung in einem Verfahren zum Herstellen einer dispensierfähigen Aktivhartlotpaste die umfaßt:
- als Aktivhartlot ein hydriertes Pulver einer Zr/Ni/Tioder einer Zr/Fe/Ti/Be-Legierung und
- als organisches Vehikel eine Mischung von
   -- im Campher-Ketal des 2,2,4-Trimethylpentan-1,3-diols als einem ersten Lösungsmittel gelöstem Poly-(butylmethylmethacrylat) als erstem Mischungspartner und
   -- in 5-Nonyl-methyl-ether als einem zweiten Lösungsmittel gelöstem Poly-(butylmethyl-methacrylat) als zweitem Mischungspartner,
   bei welchem Verfahren nach Herstellung der beiden Mischungspartner und deren Mischung
- in einem ersten Schritt an Luft oder unter einer Schutzgas-Atmosphäre eine vorgegebenen Menge Pulver mit soviel Vehikel vermischt wird, daß gerade alle Partikel des Pulvers vom Vehikel benetzt sind, und
- in einem zweiten Schritt die Partikel des Pulvers an Luft vollständig im Vehikel mechanisch dispergiert werden.

Zur Lösung der oben genannten Aufgaben besteht eine fünfte Variante der Erfindung in einem Verfahren zum Herstellen einer Aktivhartlot-Verbindung zwischen einem ersten Aluminiumoxid-Keramikkörper und einem zweiten Aluminiumoxid-Keramikkörper mittels eines durch Siebdruck oder Dispensen auf den ersten Aluminiumoxid-Keramikkörper aufgebrachten ersten Bezirks aus einer Aktivhartlotpaste und eines durch Siebdruck oder Dispensen auf den zweiten Aluminiumoxid-Keramikkörper aufgebrachten, mit dem ersten Bezirk deckungsgleichen zweiten Bezirks der Aktivhartlotpaste, die umfaßt:
- als Aktivhartlot ein hydriertes Pulver einer Zr/Ni/Tioder einer Zr/Fe/Ti/Be-Legierung und
- als organisches Vehikel
   -- Poly-(butylmethyl-methacrylat) oder Poly-(n-decylmethacrylat) als Polymer und
   -- das Campher-Ketal des 2,2,4-Trimethylpentan-1,3-diols und/oder 5-Nonyl-methyl-ether als Lösungsmittel für das Polymer,
   bei welchem Verfahren
- der erste Bezirk auf den ersten Aluminiumoxid-Keramikkörper und der zweite Bezirk auf den zweiten Aluminiumoxid-Keramikkörper aufgebracht werden,
- danach die beiden Bezirke an Luft bei ca. 100 °C getrocknet werden,
- danach die beiden Bezirke mit den beiden Aluminiumoxid-Keramikkörpern
   -- aufeinander gelegt werden,
   -- danach in einem unter Hochvakuum gehaltenen Reaktor bei mit ca. 3 K/min ansteigenden Temperaturen bis ca. 125 °C erhitzt und auf dieser Temperatur so lange gehalten werden, bis das Lösungsmittel verdampft ist,
   -- danach im selben Reaktor mit ca. 1,5 K/min ansteigenden Temperaturen bis ca. 400 °C erhitzt und auf dieser Temperatur solange entbindert werden, bis das Polymer vollständig zersetzt und verdampft ist, und
   -- danach im selben Reaktor bei ca. 900°C unter Hochvakuum hartverlötet werden.

Zur Lösung der oben genannten Aufgaben besteht eine sechste Variante der Erfindung in einem Verfahren zum Aktivhartlöten eines in einer Bohrung eines Aluminiumoxid-Keramikkörpers eingesteckten Metall-Körpers mittels eines durch Dispensen auf dem Aluminiumoxid-Keramikkörper und dem Metall-Körper aufgebrachten Pads einer Aktivhartlotpaste, die umfaßt:
- als Aktivhartlot ein hydriertes Pulver einer Zr/Ni/Tioder einer Zr/Fe/Ti/Be-Legierung und
- als organisches Vehikel eine Mischung von
   -- im Campher-Ketal des 2,2,4-Trimethylpentan-1,3-diols als einem ersten Lösungsmittel gelöstem Poly-(butylmethylmethacrylat) als erstem Mischungspartner und
   -- in 5-Nonyl-methyl-ether als einem zweiten Lösungsmittel gelöstem Poly-(butylmethyl-methacrylat) als zweitem Mischungspartner,
   bei welchem Verfahren
- die aufgebrachte Aktivhartlotpaste in einem Reaktor mit ca. 1,5 K/min ansteigenden Temperaturen bis ca. 400 °C erhitzt und auf dieser Temperatur solange entbindert wird, bis die Lösungsmittel verdampft und das Polymer vollständig zersetzt ist, und
- danach der Aluminiumoxid-Keramik-Körper und der Metall-Körper im Reaktor bei ca. 900°C unter Hochvakuum hartverlötet werden.

Nach einer ersten bevorzugten Ausgestaltung der ersten Variante der Erfindung mit Poly-(butylmethyl-methacrylat) oder Poly-(n-decyl-methacrylat) als Polymer und dem Campher-Ketal des 2,2,4-Trimethylpentan-1,3-diols als Lösungsmittel, besteht die Aktivhartlotpaste aus 70 Gew.% bis 90 Gew.% Aktivhartlot-Pulver und 30 Gew.% bis 10 Gew.% Vehikel, das seinerseits aus 5 Gew.% bis 10 Gew.% Polymer und 95 Gew.% bis 90 Gew.% Lösungsmittel besteht.

Nach einer weiteren bevorzugten Ausgestaltung dieser ersten Ausgestaltung besteht die Aktivhartlotpaste aus 82,4 Gew.% Aktivhartlot-Pulver und 17,6 Gew.% Vehikel, das seinerseits aus 7,5 Gew.% Polymer und 92,5 Gew.% Lösungsmittel besteht.

Nach einer zweiten bevorzugten Ausgestaltung der ersten Variante der Erfindung mit Poly-(butylmethyl-methacrylat) als Polymer und 5-Nonyl-methyl-ether als Lösungsmittel besteht die Aktivhartlotpaste aus 65 Gew.% bis 90 Gew.% Aktivhartlot-Pulver und 35 Gew.% bis 10 Gew.% Vehikel, das seinerseits aus 20 Gew.% bis 30 Gew.% Polymer und 80 Gew.% bis 70 Gew.% Lösungsmittel besteht.

Nach einer weiteren bevorzugten Ausgestaltung dieser zweiten Ausgestaltung besteht die Aktivhartlotpaste aus 75 Gew.% Aktivhartlot-Pulver und 25 Gew.% Vehikel, das seinerseits aus 25 Gew.% Polymer und 75 Gew.% Lösungsmittel besteht.

Nach einer bevorzugten Ausgestaltung der zweiten Variante der Erfindung besteht die Aktivhartlotpaste aus 70 Gew.% bis 90 Gew.% Aktivhartlot-Pulver und 30 Gew.% bis 10 Gew.% Vehikel, das seinerseits aus 12 Gew.% bis 25 Gew.% Polymer und 88 Gew.% bis 75 Gew.% Lösungsmitteln besteht und bei dem das Verhältnis des ersten zum zweiten Lösungsmittel etwa 1:2 beträgt.

Nach einer weiteren bevorzugten Ausgestaltung der zweiten Variante der Erfindung besteht die Aktivhartlotpaste aus 80,8 Gew.% bis 83,9 Gew.% Aktivhartlot-Pulver und 16,1 Gew.% bis 19,2 Gew.% Vehikel, das seinerseits aus 19,75 Gew.% bis 19,80 Gew.% Polymer und 80,25 Gew.% bis 80,20 Gew.% Lösungsmitteln besteht.

Die Erfindung hat folgende Vorteile:
- Die siebdruckfähigen Aktivhartlotpasten haben die für den Siebdruck erforderlichen rheologischen Eigenschaften, d.h. die erforderliche Strukturviskosität und die erforderliche Fähigkeit zum Benetzen der Keramikkörper und/oder der Metall-Körper.
- Die siebdruck- und die dispensierfähigen Aktivhartlotpasten sind ausreichend sedimentationsstabil, d.h. die Partikel des Pulvers setzen sich, wenn überhaupt, in der fertigen Aktivhartlotpaste nur äußerst langsam ab.
- Innerhalb der siebdruck- und der dispensierfähigen Aktivhartlotpasten findet bei Umgebungstemperatur, also ca. 20 °C, keine chemische Reaktion des Vehikels mit der Oberfläche von Partikeln des Pulvers statt.
- Bei der thermischen Zersetzung des Vehikels verbleiben keine kohlenstoffhaltigen Rückstände auf der Oberfläche der Partikel des Pulvers, die das Aktivhartlot beim Verlöten deaktivieren könnten.
- Demzufolge haften die Aktivhartlotpasten sehr gut auf den Keramikkörpern und den Metall-Körpern, und auch nach dem Hartlöten sind die Haftung, die mechanische Festigkeit und die Dichtheit der Lötstellen derart ausgezeichnet, daß sie im Biegeversuch nicht abreißen, sondern dieses erst in der Keramik erfolgt und daß die Lötstellen langzeit-hochvakuumdicht sind.
- Die Lösungsmittel verdampfen im Vakuum bereits unterhalb von 200 °C rückstandsfrei.
- Das jeweilige Vehikel läßt sich vor dem Hartverlöten aus den siebdruck- bzw. dispensierfähigen Aktivhartlotpasten rückstands- und störungsfrei entfernen, insb. bei maximal 400 °C im Hochvakuum (Größenordnung 10⁻⁹ bar = 10⁻⁴ Pa), so daß auf den noch hartzuverlötenden Körpern keine Rückstände vorhanden sind.
- Das Spreitungsverhalten der Aktivhartlotpasten, also deren Fließfähigkeit bei der Löttemperatur, ist ausgezeichnet.

Die Erfindung und weitere Vorteile werden nun anhand von bevorzugten Ausführungsbeispielen der Aktivhartlotpasten und anhand der Verfahrensvarianten der Erfindung näher erläutert.

Für alle Beispiele gilt: Es wird ein hydriertes Pulver einer Zr/Ni/Ti- oder einer Zr/Fe/Ti/Be-Legierung verwendet, dessen Korngröße höchstens 40 µm beträgt; dabei werden die im eingangs genannten Stand der Technik hervorgehobenen speziellen Zusammensetzungen dieser Legierungen bevorzugt; das Vehikel setzt sich aus einem Polymer und einem Lösungsmittel für das Polymer zusammen; das Polymer ist entweder Poly-(butylmethyl-methacrylat) oder Poly-(n-decylmethacrylat); das Lösungsmittel ist entweder das Campher-Ketal des 2,2,4-Trimethylpentan-1,3-diols oder 5-Nonyl-methyl-ether, wobei auch Vehikel verwendet werden können, die beide Lösungsmittel, enthalten.

### Beispiel 1

Eine siebdruckfähige Aktivhartlotpaste mit dem Campher-Ketal des 2,2,4-Trimethylpentan-1,3-diols als Lösungsmittel besteht aus 70 Gew.% bis 90 Gew.%, insb. 82,4 Gew.%, Pulver und 30 Gew.% bis 10 Gew.%, insb. 17,6 Gew.%, Vehikel; dieses besteht aus 5 Gew.% bis 10 Gew.%, insb. 7,5 Gew.%, Polymer und 95 Gew.% bis 90 Gew.%, insb. 92,5 Gew.%, Lösungsmittel.

### Beispiel 2

Eine siebdruckfähige Aktivhartlotpaste nach Anspruch 1 mit 5-Nonyl-methyl-ether als Lösungsmittel besteht aus 65 Gew.% bis 90 Gew.%, insb. 75 Gew.%, Aktivhartlot-Pulver und 35 Gew.% bis 10 Gew.%, insb. 25 Gew.%, Vehikel; dieses besteht aus 20 Gew.% bis 30 Gew.%, insb. 25 Gew.%, Polymer und 80 Gew.% bis 70 Gew.%, insb. 75 Gew.%, Lösungsmittel.

Mit den Aktivhartlotpasten von Beispiel 1 oder 2 kann ein erster Aluminiumoxid-Keramikkörper mit einem zweiten Aluminiumoxid-Keramikkörper hartverlötet werden. Das Aluminiumoxid kann von üblicher Reinheit (96%) sein; es braucht nicht, kann jedoch, hochrein (99,9%) sein.

Ein Hauptanwendungsgebiet von Aluminiumoxid-Keramikkörpern, die hartverlötet werden müssen, sind kapazitive oder resistive Drucksensoren. Ein kapazitiver Drucksensor besteht z.B. aus einem scheibenförmigen Grundkörper und aus einer scheibenförmigen dünnen Membran. Beide Teile sind an ihrem jeweiligen Rand miteinander hartverlötet. Davor sind die einander zugewandten Flächen von Grundkörper und Membran mit Metallflächen, z.B. aus Tantal, versehen worden.

Die erforderliche Menge an Aktivhartlot wird durch das Siebdrucken oder Dispensen (Näheres siehe unten Beispiel 3), vorgegeben. Diese Menge wird so ausreichend bemessen, daß sie beim Hartverlöten auch als Abstandsring zwischen Grundkörper und Membran wirkt und sich zwischen beiden eine Kammer ausbildet.

Die Membran ist somit außerhalb der Lötstelle vom Grundkörper abgehoben und die beiden Metallflächen bilden einen elektrischen Kondensator. Ferner bewegt die Membran sich unter einem auf sie einwirkenden Druck. Dadurch verändert sich aber der gegenseitige Abstand der beiden Metallflächen, so daß der Kondensator seine Kapazität ändert.

Damit ein derartiger kapazitiver Drucksensor z.B. als Absolutdrucksensor verwendet werden kann, muß die Lötstelle langzeit-hochvakuumdicht sein.

### Beispiel 3

Eine dispensierfähige Aktivhartlotpaste enthält im Campher-Ketal des 2,2,4-Trimethylpentan-1,3-diols als einem ersten Lösungsmittel gelöstes Poly-(butylmethyl-methacrylat) als einen ersten Mischungspartner und in 5-Nonyl-methyl-ether als einem zweiten Lösungsmittel gelöstes Poly-(butylmethylmethacrylat) als zweiten Mischungspartner.

Diese Aktivhartlotpaste besteht aus 70 Gew.% bis 90 Gew.%, insb. 80,8 Gew.% bis 83,9 Gew.%, Aktivhartlot-Pulver und 30 Gew.% bis 10 Gew.%, insb. 16,1 Gew.% bis 19,2 Gew.%, Vehikel; dieses besteht aus 12 Gew.% bis 25 Gew.%, insb. 19,75 Gew.% bis 19,80 Gew.%, Polymer und 88 Gew.% bis 75 Gew.%, insb. 80,25 Gew.% bis 80,20 Gew.%, Lösungsmitteln, wobei das Verhältnis des ersten zum zweiten Lösungsmittel etwa 1:2 beträgt.

Mit den Aktivhartlotpasten nach Beispiel 3 läßt sich ein erster Aluminiumoxid-Keramikkörpers mit einem zweiten Aluminiumoxid-Keramikkörper oder ein Aluminiumoxid-Keramik-Körpers mit einem Metall-Körper hartverlöten.

Ein Hauptanwendungsgebiet der zuerst genannten Hartverlötung ist wieder die oben erläuterte Keramik-Keramik-Aktivhartlötung von kapazitiven Drucksensoren; hier wird, wie oben schon kurz erwähnt worden ist, am Rand des Grundkörpers und am Rand der Membran ein aus vielen nebeneinanderliegenden und sich berührenden Dots bestehender Ring aus Aktivhartlotpaste aufgebracht.

Die Metall-Keramik-Aktivhartlötung wird ebenfalls bei diesen kapazitiven Drucksensoren angewendet. Die oben erwähnten, als Kondensatorplatten wirkenden Metallflächen müssen nämlich elektrisch kontaktiert werden. Dies erfolgt bei der Metallfläche der Membran dadurch, daß sie bis in die Lötstelle reicht und dort, da sie von außen zugänglich ist, dort kontaktiert wird.

Die Metallfläche des Grundkörpers wird dagegen so kontaktiert, daß von dessen Außenseite her ein Metallstift, der z.B. ebenfalls aus Tantal besteht, in eine im Grundkörper vorgesehene Bohrung eingesteckt wird. Der Metallstift reicht in dieser Bohrung bis zur Metallfläche, und in der Bohrung muß der Metallstift hartverlötet werden.

Ein weiteres Hauptanwendungsgebiet der oben genannten Metall-Keramik-Aktivhartverlötung ist bei magnetischinduktiven Durchflußmessern mit keramischen Meßrohren gegeben, vgl. die eingangs erwähnte US-A 50 95 759. Hier müssen mindestens zwei als Elektroden dienende Metallstifte eingelötet werden, die bis zur Innenfläche des Meßrohrs reichen und mit denen eine Spannung abgegriffen wird, die in einer im Meßrohr strömenden elektrisch leitfähigen Flüssigkeit aufgrund des Faradayschen Induktionsgesetzes von einem Magnetfeld induziert wird.

### Beispiel 4

Eine siebdruckfähige Aktivhartlotpaste wird wie folgt hergestellt: Zunächst wird das Polymer im Lösungsmittel gelöst, was z.B. durch Rühren, insb. bei großen Mengen durch maschinelles Rühren, geschieht.

Dann wird in einem ersten Schritt eine vorgegebene Menge Pulver mit gerade soviel Vehikel vermischt, daß alle Partikel des Pulvers vom Vehikel benetzt sind, d.h. es wird der sogenannte Ölwert eingestellt; dies geschieht an Luft oder unter einer Schutzgas-Atmosphäre, z.B. unter Argon.

Schließlich werden in einem zweiten Schritt die Partikel des Pulvers an Luft vollständig im Vehikel mechanisch dispergiert, wozu ein übliches Drei-Walzen-Werk benutzt werden kann.

### Beispiel 5

Eine dispensierfähige Aktivhartlotpaste wird wie folgt hergestellt: Zunächst werden die beiden Mischungspartner hergestellt, d.h. im Campher-Ketal des 2,2,4-Trimethylpentan-1,3-diols wird das Poly-(butylmethylmethacrylat) gelöst und in 5-Nonyl-methyl-ether das Poly(butylmethyl-methacrylat), was z.B. jeweils durch Rühren, insb. bei großen Mengen durch maschinelles Rühren, geschieht. Anschließend werden die Mischungspartner, im erforderlichen, z.B. im oben in Beispiel 3 erwähnten, Verhältnis gemischt.

Dann wird in einem ersten Schritt eine vorgegebenen Menge Pulver mit soviel Vehikel vermischt, daß gerade alle Partikel des Pulvers vom Vehikel benetzt sind; es wird also wieder der Ölwert eingestellt; dies geschieht an Luft oder unter einer Schutzgas-Atmosphäre, z.B. unter Argon.

In einem zweiten Schritt werden schließlich die Partikel des Pulvers an Luft vollständig im Vehikel mechanisch dispergiert, wozu auch hier ein übliches Drei-Walzen-Werk benutzt werden kann.

### Beispiel 6

Zwei Aluminiumoxid-Keramikkörper werden wie folgt miteinander hartverlötet: Durch Siebdruck oder Dispensen wird auf den ersten Aluminiumoxid-Keramikkörper ein erster Bezirk aus einer Aktivhartlotpaste aufgebracht. In gleicher Weise wird auf den zweiten Aluminiumoxid-Keramikkörper ein mit dem ersten Bezirk deckungsgleicher zweiter Bezirk der Aktivhartlotpaste aufgebracht.

Danach werden die beiden Bezirke an Luft bei 100 °C getrocknet und anschließend zusammen mit den beiden Aluminiumoxid-Keramikkörpern aufeinander gelegt. Dann werden die Aluminiumoxid-Keramikkörper in einem unter Hochvakuum gehaltenen Reaktor bei mit 3 K/min ansteigenden Temperaturen bis 125 °C erhitzt und auf dieser Temperatur so lange gehalten, bis das Lösungsmittel verdampft ist.

Danach werden die Aluminiumoxid-Keramikkörper im selben Reaktor mit 1,5 K/min ansteigenden Temperaturen bis 400 °C erhitzt und auf dieser Temperatur solange entbindert - also vom Vehikel, das auch als Binder, nämlich für das Pulver, bezeichnet werden kann, befreit -, bis das Polymer vollständig zersetzt und verdampft ist. Schließlich werden die Aluminiumoxid-Keramikkörper im selben Reaktor bei 900°C unter Hochvakuum hartverlötet.

### Beispiel 7

Ein Aluminiumoxid-Keramikkörper und ein in eine Bohrung desselben eingesteckter Metall-Körper werden wie folgt hartverlötet: Durch Dispensen werden Dots der Aktivhartlotpaste in form eines Pads auf den Aluminiumoxid-Keramikkörper und den Metall-Körper aufgebracht.

wenn dabei der Metall-Körper mit der Außenfläche des Aluminiumoxid-Keramikkörpers fluchtet, kann der Pad das Ende des Metall-Körpers bis auf die Keramik überdecken. Wenn der Metall-Körper über die Außenfläche hervorsteht, so wird der Pad um den Metall-Körper ringförmig herumgelegt.

Dann wird die aufgebrachte Aktivhartlotpaste in einem Reaktor bei mit 1,5 K/min ansteigenden Temperaturen bis auf 400 °C erhitzt und auf dieser Temperatur solange entbindert, bis die Lösungsmittel verdampft und das Polymer vollständig zersetzt ist.

Schließlich werden der Aluminiumoxid-Keramik-Körper und der Metall-Körper im Reaktor bei 900°C unter Hochvakuum hartverlötet.

## Patentansprüche

1. Siebdruckfähige Aktivhartlotpaste zum gegenseitigen Hartverlöten eines ersten Aluminiumoxid-Keramikkörpers mit einem zweiten Aluminiumoxid-Keramikkörper, die umfaßt:
- als Aktivhartlot ein hydriertes Pulver einer Zr/Ni/Tioder einer Zr/Fe/Ti/Be-Legierung und
- als organisches Vehikel
-- Poly-(butylmethyl-methacrylat) oder Poly-(n-decylmethacrylat) als Polymer und
-- das Campher-Ketal des 2,2,4-Trimethylpentan-1,3-diols und/oder 5-Nonyl-methyl-ether als Lösungsmittel für das Polymer.

2. Siebdruckfähige Aktivhartlotpaste nach Anspruch 1 mit Poly-(butylmethyl-methacrylat) oder Poly-(n-decylmethacrylat) als Polymer und dem Campher-Ketal des 2,2,4-Trimethylpentan-1,3-diols als Lösungsmittel, die aus 70 Gew.% bis 90 Gew.% Aktivhartlot-Pulver und 30 Gew.% bis 10 Gew.% Vehikel besteht, das seinerseits aus 5 Gew.% bis 10 Gew.% Polymer und 95 Gew.% bis 90 Gew.% Lösungsmittel besteht.

3. Siebdruckfähige Aktivhartlotpaste nach Anspruch 2, die aus 82,4 Gew.% Aktivhartlot-Pulver und 17,6 Gew.% Vehikel besteht, das seinerseits aus 7,5 Gew.% Polymer und 92,5 Gew.% Lösungsmittel besteht.

4. Siebdruckfähige Aktivhartlotpaste nach Anspruch 1 mit Poly-(butylmethyl-methacrylat) als Polymer und 5-Nonyl-methyl-ether als Lösungsmittel, die aus 65 Gew.% bis 90 Gew.% Aktivhartlot-Pulver und 35 Gew.% bis 10 Gew.% Vehikel besteht, das seinerseits aus 20 Gew.% bis 30 Gew.% Polymer und 80 Gew.% bis 70 Gew.% Lösungsmittel besteht.

5. Siebdruckfähige Aktivhartlotpaste nach Anspruch 4, die aus 75 Gew.% Aktivhartlot-Pulver und 25 Gew.% Vehikel besteht, das seinerseits aus 25 Gew.% Polymer und 75 Gew.% Lösungsmittel besteht.

6. Dispensierfähige Aktivhartlotpaste zum Hartverlöten eines ersten Aluminiumoxid-Keramikkörpers mit einem zweiten Aluminiumoxid-Keramikkörper oder eines Aluminiumoxid-Keramik-Körpers mit einem Metall-Körper, die umfaßt:
- als Aktivhartlot ein hydriertes Pulver einer Zr/Ni/Tioder einer Zr/Fe/Ti/Be-Legierung und
- als organisches Vehikel eine Mischung von
-- im Campher-Ketal des 2,2,4-Trimethylpentan-1,3-diols als einem ersten Lösungsmittel gelöstem Poly-(butylmethylmethacrylat) als erstem Mischungspartner und
-- in 5-Nonyl-methyl-ether als einem zweiten Lösungsmittel gelöstem Poly-(butylmethyl-methacrylat) als zweitem Mischungspartner.

7. Dispensierfähige Aktivhartlotpaste nach Anspruch 6, die aus 70 Gew.% bis 90 Gew.% Aktivhartlot-Pulver und 30 Gew.% bis 10 Gew.% Vehikel besteht, das seinerseits aus 12 Gew.% bis 25 Gew.% Polymer und 88 Gew.% bis 75 Gew.% Lösungsmitteln besteht und bei dem das Verhältnis des ersten zum zweiten Lösungsmittel etwa 1:2 beträgt.

8. Dispensierfähige Aktivhartlotpaste nach Anspruch 7, die aus 80,8 Gew.% bis 83,9 Gew.% Aktivhartlot-Pulver und 16,1 Gew.% bis 19,2 Gew.% Vehikel besteht, das seinerseits aus 19,75 Gew.% bis 19,80 Gew.% Polymer und 80,25 Gew.% bis 80,20 Gew.% Lösungsmitteln besteht.

9. Verfahren zum Herstellen einer siebdruckfähigen Aktivhartlotpaste, die umfaßt:
- als Aktivhartlot ein hydriertes Pulver einer Zr/Ni/Tioder einer Zr/Fe/Ti/Be-Legierung und
- als organisches Vehikel
-- Poly-(butylmethyl-methacrylat) oder Poly-(n-decylmethacrylat) als Polymer und
-- das Campher-Ketal des 2,2,4-Trimethylpentan-1,3-diols als Lösungsmittel für das Polymer,
bei welchem Verfahren nach Lösen des Polymers im Lösungsmittel
- in einem ersten Schritt an Luft oder unter einer Schutzgas-Atmosphäre eine vorgegebene Menge Pulver mit soviel Vehikel vermischt wird, daß gerade alle Partikel des Pulvers vom Vehikel benetzt sind, und
- in einem zweiten Schritt die Partikel des Pulvers an Luft vollständig im Vehikel mechanisch dispergiert werden.

10. Verfahren zum Herstellen einer dispensierfähigen Aktivhartlotpaste die umfaßt:
- als Aktivhartlot ein hydriertes Pulver einer Zr/Ni/Tioder einer Zr/Fe/Ti/Be-Legierung und
- als organisches Vehikel eine Mischung von
-- im Campher-Ketal des 2,2,4-Trimethylpentan-1,3-diols als einem ersten Lösungsmittel gelöstem Poly-(butylmethylmethacrylat) als erstem Mischungspartner und
-- in 5-Nonyl-methyl-ether als einem zweiten Lösungsmittel gelöstem Poly-(butylmethyl-methacrylat) als zweitem Mischungspartner,
bei welchem Verfahren nach Herstellung der beiden Mischungspartner und deren Mischung
- in einem ersten Schritt an Luft oder unter einer Schutzgas-Atmosphäre eine vorgegebene Menge Pulver mit soviel Vehikel vermischt wird, daß gerade alle Partikel des Pulvers vom Vehikel benetzt sind, und
- in einem zweiten Schritt die Partikel des Pulvers an Luft vollständig im Vehikel mechanisch dispergiert werden.

11. Verfahren zum Herstellen einer Aktivhartlot-Verbindung zwischen einem ersten Aluminiumoxid-Keramikkörper und einem zweiten Aluminiumoxid-Keramikkörper mittels eines durch Siebdruck oder Dispensen auf den ersten Aluminiumoxid-Keramikkörper aufgebrachten ersten Bezirks aus einer Aktivhartlotpaste und eines durch Siebdruck oder Dispensen auf den zweiten Aluminiumoxid-Keramikkörper aufgebrachten, mit dem ersten Bezirk deckungsgleichen zweiten Bezirks der Aktivhartlotpaste, die umfaßt:
- als Aktivhartlot ein hydriertes Pulver einer Zr/Ni/Tioder einer Zr/Fe/Ti/Be-Legierung und
- als organisches Vehikel
-- Poly-(butylmethyl-methacrylat) oder Poly-(n-decylmethacrylat) als Polymer und
-- das Campher-Ketal des 2,2,4-Trimethylpentan-1,3-diols und/oder 5-Nonyl-methyl-ether als Lösungsmittel für das Polymer,
bei welchem Verfahren
- der erste Bezirk auf den ersten Aluminiumoxid-Keramikkörper und der zweite Bezirk auf den zweiten Aluminiumoxid-Keramikkörper aufgebracht werden,
- danach die beiden Bezirke an Luft bei ca. 100 °C getrocknet werden,
- danach die beiden Bezirke mit den beiden Aluminiumoxid-Keramikkörpern
-- aufeinander gelegt werden,
-- danach in einem unter Hochvakuum gehaltenen Reaktor bei mit ca. 3 K/min ansteigenden Temperaturen bis ca. 125 °C erhitzt und auf dieser Temperatur so lange gehalten werden, bis das Lösungsmittel verdampft ist,
-- danach im selben Reaktor mit ca. 1,5 K/min ansteigenden Temperaturen bis ca. 400 °C erhitzt und auf dieser Temperatur solange entbindert werden, bis das Polymer vollständig zersetzt und verdampft ist, und
-- danach im selben Reaktor bei ca. 900°C unter Hochvakuum hartverlötet werden.

12. Verfahren zum Aktivhartlöten eines in einer Bohrung eines Aluminiumoxid-Keramikkörpers eingesteckten Metall-Körpers mittels eines durch Dispensen auf dem Aluminiumoxid-Keramikkörper und dem Metall-Körper aufgebrachten Pads einer Aktivhartlotpaste, die umfaßt:
- als Aktivhartlot ein hydriertes Pulver einer Zr/Ni/Tioder einer Zr/Pe/Ti/Be-Legierung und
- als organisches Vehikel eine Mischung von
-- im Campher-Ketal des 2,2,4-Trimethylpentan-1,3-diols als einem ersten Lösungsmittel gelöstem Poly-(butylmethylmethacrylat) als erstem Mischungspartner und
-- in 5-Nonyl-methyl-ether als einem zweiten Lösungsmittel gelöstem Poly-(butylmethyl-methacrylat) als zweitem Mischungspartner,
bei welchem Verfahren
- die aufgebrachte Aktivhartlotpaste in einem Reaktor mit ca. 1,5 K/min ansteigenden Temperaturen bis ca. 400 °C erhitzt und auf dieser Temperatur solange entbindert wird, bis die Lösungsmittel verdampft und das Polymer vollständig zersetzt ist, und
- danach der Aluminiumoxid-Keramik-Körper und der Metall-Körper im Reaktor bei ca. 900°C unter Hochvakuum hartverlötet werden.

## Claims

1. A screen-printable active hard-solder paste for hard-soldering a first aluminium oxide ceramic body to a second aluminium oxide ceramic body, said paste comprising:
- as active hard solder, a hydrogenated powder of a Zr/Ni/Ti or Zr/Fe/Ti/Be alloy, and
- as organic vehicle,
-- poly(butylmethylmethacrylate) or poly(n-decylmethacrylate) as a polymer and
-- the camphor ketal of 2,2,4-trimethylpentane-1,3-diol and/or 5-nonylmethylether as a solvent for the polymer.

2. A screen-printable active hard-solder paste according to claim 1 with poly(butylmethylmethacrylate) or poly(n-decylmethacrylate) as a polymer and the camphor ketal of 2,2,4-trimethylpentane-1,3-diol as a solvent, said paste comprising 70 wt.% to 90 wt.% active hard-solder powder and 30 wt.% to 10 wt.% vehicle, for its part comprising 5 wt.% to 10 wt.% polymer and 95 wt.% to 90 wt.% solvent.

3. A screen-printable active hard-solder paste according to claim 2, comprising 82.4 wt.% active hard-solder powder and 17.6 wt.% vehicle, for its part comprising 7.5 wt.% polymer and 92.5 wt.% solvent.

4. A screen-printable active hard-solder paste according to claim 1 with poly(butylmethylmethacrylate) as a polymer and 5-nonylmethylether as a solvent, comprising 65 wt.% to 90 wt.% active hard-solder powder and 35 wt.% to 10 wt.% vehicle, for its part comprising 20 wt.% to 30 wt.% polymer and 80 wt.% to 70 wt.% solvent.

5. A screen-printable active hard-solder paste according to claim 4, comprising 75 wt.% active hard-solder powder and 25 wt.% vehicle, for its part comprising 25 wt.% polymer and 75 wt.% solvent.

6. A dispensable active hard-solder paste for hard-soldering a first aluminium oxide ceramic body to a second aluminium oxide ceramic body or an aluminium oxide ceramic body to a metal body, comprising:
- as active hard solder, a hydrogenated powder of a Zr/Ni/Ti or Zr/Fe/Ti/Be alloy, and
- as organic vehicle, a mixture of
-- as a first mixture component, poly(butylmethylmethacrylate) dissolved in the camphor ketal of 2,2,4-trimethylpentane-1,3-diol as a first solvent and
-- as a second mixture component, poly(butylmethylmethacrylate) dissolved in 5-nonylmethylether as a second solvent.

7. A dispensable active hard-solder paste according to claim 6, comprising 70 wt.% to 90 wt.% active hard-solder powder and 30 wt.% to 10 wt.% vehicle, for its part comprising 12 wt% to 25 wt.% polymer and 88 wt.% to 75 wt.% solvents and in which the ratio of the first to the second solvent is approximately 1:2.

8. A dispensable active hard-solder paste according to claim 7, comprising 80.8 wt.% to 83.9 wt.% active hard-solder powder and 16.1 wt.% to 19.2 wt.% vehicle, for its part comprising 19.75 wt% to 19.80 wt.% polymer and 80.25 wt.% to 80.20 wt.% solvents.

9. A process for the preparation of a screen-printable active hard-solder paste comprising:
- as active hard solder, a hydrogenated powder of a Zr/Ni/Ti or Zr/Fe/Ti/Be alloy, and
- as organic vehicle,
- - poly(butylmethylmethacrylate) or poly(n-decylmethacrylate) as a polymer and
- - the camphor ketal of 2,2,4-trimethylpentane-1,3-diol as a solvent for the polymer,
in which process, after the polymer has been dissolved in the solvent,
- in a first step a predetermined quantity of powder is mixed in air or in a protective-gas atmosphere with enough vehicle for all the particles of the powder to be wetted by the vehicle, and
- in a second step the particles of the powder are entirely mechanically dispersed in the vehicle in air.

10. A process for the preparation of a dispensable active hard-solder paste comprising:
- as active hard solder, a hydrogenated powder of a Zr/Ni/Ti or Zr/Fe/Ti/Be alloy, and
- as organic vehicle, a mixture of
-- as a first mixture component, poly(butylmethylmethacrylate) dissolved in the camphor ketal of 2,2,4-trimethylpentane-1,3-diol as a first solvent and
-- as a second mixture component, poly(butylmethylmethacrylate) dissolved in 5-nonylmethylether as a second solvent,
in which process, after the two mixture components have been prepared and mixed,
- in a first step a predetermined quantity of powder is mixed in air or in a protective-gas atmosphere with enough vehicle for all the particles of the powder to be wetted by the vehicle, and
- in a second step the particles of the powder are entirely mechanically dispersed in the vehicle in air.

11. A method of producing an active hard-solder bond between a first aluminium oxide ceramic body and a second aluminium oxide ceramic body by means of a first zone of an active hard-solder paste applied by screen printing or dispensing to the first aluminium oxide ceramic body, and a second zone of the active hard-solder paste applied by screen printing or dispensing to the second aluminium oxide ceramic body and coinciding with the first zone, said paste comprising:
- as active hard solder, a hydrogenated powder of a Zr/Ni/Ti or Zr/Fe/Ti/Be alloy, and
- as organic vehicle,
- - poly(butylmethylmethacrylate) or poly(n-decylmethacrylate) as a polymer and
- - the camphor ketal of 2,2,4-trimethylpentane-1,3-diol and/or 5-nonylmethylether as a solvent for the polymer, in which process
- the first zone is applied to the first aluminium oxide ceramic body and the second zone is applied to the second aluminium oxide ceramic body,
- then the two zones are dried in air at approximately 100°C,
- then the two zones with the two aluminium oxide ceramic bodies
-- are placed on top of one another,
-- then heated in a reactor maintained under high vacuum at temperatures rising by approximately 3 K/min up to approximately 125°C and held at this temperature until the solvent has evaporated,
-- then heated in the same reactor at temperatures rising by approximately 1.5 K/min up to approximately 400°C and unbound at this temperature until the polymer has completely decomposed and evaporated, and
-- then hard-soldered in the same reactor under high vacuum at approximately 900°C.

12. A method of actively hard-soldering a metal body inserted into a bore of an aluminium oxide ceramic body by means of a pad of an active hard-solder paste applied by dispensing to the aluminium oxide ceramic body and the metal body, said paste comprising:
- as active hard solder, a hydrogenated powder of a Zr/Ni/Ti or Zr/Fe/Ti/Be alloy, and
- as organic vehicle, a mixture of
- - as a first mixture component, poly(butylmethylmethacrylate) dissolved in the camphor ketal of 2,2,4-trimethylpentane-1,3-diol as a first solvent and
- - as a second mixture component, poly(butylmethylmethacrylate) dissolved in 5-nonylmethylether as a second solvent,
in which method
- the applied active hard-solder paste is heated in a reactor at temperatures rising by approximately 1.5 K/min up to approximately 400°C and unbound at this temperature until the solvent has evaporated and the polymer has completely decomposed, and
- then the aluminium oxide ceramic body and the metal body are hard-soldered in the reactor under high vacuum at approximately 900°C.

## Revendications

1. Pâte à braser active pouvant être imprimée par sérigraphie, pour le brasage fort réciproque d'un premier corps en céramique/oxyde d'aluminium avec un deuxième corps en céramique/oxyde d'aluminium comprenant :
- à titre de métal d'apport actif pour brasage fort, une poudre hydratée d'un alliage Zr/Ni/Ti ou Zr/Fe/Ti/Be et
- à titre de véhicule organique
- du poly(méthacrylate de butylméthyle) ou du poly(méthacrylate de n-décyle) comme polymère et
- le camphre - cétal du 2,2,4-triméthylpentane-1,3-diol et/ou l'éther méthylique de 5-nonyle comme solvant pour le polymère.

2. Pâte à braser active, pouvant être imprimée par sérigraphie, pour brasage fort, selon la revendication 1, avec du poly(méthacrylate de butylméthyle) ou du poly(méthacrylate de n-décyle) comme polymère et le camphre - cétal de 2,2,4-triméthylpentane-1,3-diol comme solvant, qui est constituée de 70 % en poids à 90 % en poids de poudre de métal d'apport actif pour brasage fort et de 30 % en poids à 10 % en poids de véhicule, composé pour sa part de 5 % en poids à 10 % en poids de polymère et 95 % à 90 % en poids de solvant.

3. Pâte à braser active, pouvant être imprimée par sérigraphie, pour brasage fort, selon la revendication 2, qui est constituée de 82,4 % en poids de poudre de métal d'apport actif pour brasage fort et de 17,6 % en poids de véhicule, composé pour sa part de 7,5 % en poids de polymère et 92,5 % en poids de solvant.

4. Pâte à braser active, pouvant être imprimée par sérigraphie, pour brasage fort, selon la revendication 1, avec du poly(méthacrylate de butylméthyle) comme polymère et de l'éther méthylique de 5-nonyle comme solvant, qui est constituée de 65 % en poids à 90 % en poids de poudre de métal d'apport actif pour brasage fort et de 35 % en poids à 10 % en poids de véhicule, composé pour sa part de 20 % en poids à 30 % en poids de polymère et 80 % à 70 % en poids de solvant.

5. Pâte à braser active, pouvant être imprimée par sérigraphie, pour brasage fort, selon la revendication 4, qui est constituée de 75 % en poids de poudre de métal d'apport actif pour brasage fort et de 25 % en poids de véhicule, composé pour sa part de 25 % en poids de polymère et 75 % en poids de solvant.

6. Pâte à braser active, pouvant être distribuée, pour le brasage fort d'un premier corps en céramique/oxyde d'aluminium avec un deuxième corps en céramique/oxyde d'aluminium ou d'un corps en céramique/oxyde d'aluminium avec un corps métallique, comprenant :
- à titre de métal d'apport actif pour brasage fort, une poudre hydratée d'un alliage Zr/Ni/Ti ou Zr/Fe/Ti/Be et
- à titre de véhicule organique un mélange de
- poly(méthacrylate de butylméthyle) dissous dans du camphre - cétal de 2,2,4-triméthylpentane-1,3-diol à titre de premier solvant, comme premier composant de mélange, et
- poly(méthacrylate de butylméthyle) dissous dans de l'éther méthylique de 5-nonyle à titre de deuxième solvant, comme deuxième composant de mélange.

7. Pâte à braser active, pouvant être distribuée, pour brasage fort, selon la revendication 6, qui est constituée de 70 % en poids à 90 % en poids de poudre de métal d'apport actif pour brasage fort et de 30 % en poids à 10 % en poids de véhicule, composé pour sa part de 12 % en poids à 25 % en poids de polymère et de 88 % à 75 % en poids de solvants et dans lequel le rapport du premier sur le deuxième solvant se situe à environ 1 : 2.

8. Pâte à braser active, pouvant être distribuée, pour le brasage fort, selon la revendication 7, qui est constituée de 80,8 % en poids à 83,9 % en poids de poudre de métal d'apport actif pour brasage fort et de 16,1 % en poids à 19,2 % en poids de véhicule, composé pour sa part de 19,75 % en poids à 19,80 % en poids de polymère et 80,25 % en poids à 80,20 % en poids de solvants.

9. Procédé de fabrication d'une pâte à braser active, pouvant être imprimée par sérigraphie, pour brasage fort, comprenant :
- à titre de métal d'apport actif pour brasage fort, une poudre hydratée d'un alliage Zr/Ni/Ti ou Zr/Fe/Ti/Be et
- à titre de véhicule organique
- du poly(méthacrylate de butylméthyle) ou du poly(méthacrylate de n-décyle) comme polymère et
- le camphre - cétal du 2,2,4-triméthylpentane-1,3-diol comme solvant pour le polymère,
procédé dans lequel, après solution du polymère dans le solvant,
- on mélange dans une première étape, à l'air ou sous une atmosphère de gaz protecteur, une quantité prédéterminée de poudre avec suffisamment de véhicule pour que justement toutes les particules de la poudre soient mouillées par le véhicule, et
- on disperse mécaniquement, dans une deuxième étape, à l'air, entièrement les particules de poudre dans le véhicule.

10. Procédé de fabrication d'une pâte à braser active, pouvant être distribuée, pour brasage fort, comprenant :
- à titre de métal d'apport actif pour brasage fort, une poudre hydratée d'un alliage Zr/Ni/Ti ou Zr/Fe/Ti/Be et
- à titre de véhicule organique un mélange de
- poly(méthacrylate de butylméthyle) dissous dans du camphre - cétal de composant de mélange et
- poly(méthacrylate de butylméthyle) dissous dans de l'éther méthylique de 5-nonyle à titre de deuxième solvant, comme deuxième composant de mélange,
procédé dans lequel, après préparation des deux composants de mélange et leur mélange,
- on mélange dans une première étape, à l'air ou sous une atmosphère de gaz protecteur, une quantité prédéterminée de poudre avec suffisamment de véhicule pour que justement toutes les particules de la poudre soient mouillées par le véhicule, et
- on disperse mécaniquement à l'air, dans une deuxième étape, entièrement les particules de poudre dans le véhicule.

11. Procédé de préparation d'un composé de métal d'apport actif pour brasage fort entre un premier corps en céramique/oxyde d'aluminium et un deuxième corps en céramique/oxyde d'aluminium au moyen d'un premier secteur, constitué d'une pâte à braser active pour brasage fort, déposé par sérigraphie ou par distribution sur le premier corps en céramique/oxyde d'aluminium et d'un deuxième secteur, de couverture identique au premier, constitué d'une pâte à braser active pour brasage fort, déposé par sérigraphie ou par distribution sur le deuxième corps en céramique/oxyde d'aluminium, comprenant :
- à titre de métal d'apport actif pour brasage fort, une poudre hydratée d'un alliage Zr/Ni/Ti ou Zr/Fe/Ti/Be et
- à titre de véhicule organique
- du poly(méthacrylate de butylméthyle) ou du poly(méthacrylate de n-décyle) comme polymère et
- le camphre - cétal du 2,2,4-triméthylpentane-1,3-diol et/ou de l'éther méthylique de 5-nonyle comme solvant pour le polymère,
procédé dans lequel
- le premier secteur est déposé sur le premier corps en céramique/oxyde d'aluminium et le deuxième secteur sur le deuxième corps en céramique/oxyde d'aluminium,
- les deux secteurs sont ensuite séchés à l'air à environ 100°C,
- les deux secteurs avec les deux corps en céramique/oxyde d'aluminium sont ensuite
- posés les uns sur les autres,
- puis chauffés dans un réacteur sous vide élevé à des températures augmentant à environ 3 K/min jusqu'à atteindre 125°C et maintenus à cette température jusqu'à ce que le solvant s'évapore,
- puis chauffés dans le même réacteur à des températures augmentant d'environ 1,5 K/min jusqu'à atteindre environ 400°C et maintenus à cette température jusqu'à ce que le polymère soit entièrement décomposé et évaporé, et
- ensuite soumis à un brasage fort dans le même réacteur à environ 900°C sous vide élevé.

12. Procédé de brasage fort avec métal d'apport actif d'un corps métallique inséré dans un trou d'un corps en céramique/oxyde d'aluminium au moyen d'un tampon d'une pâte à braser active pour brasage fort, déposé par distribution sur le corps en céramique/oxyde d'aluminium et le corps en métal, comprenant :
- à titre de métal d'apport actif pour brasage fort, une poudre hydratée d'un alliage Zr/Ni/Ti ou Zr/Fe/Ti/Be et
- à titre de véhicule organique un mélange de
- poly(méthacrylate de butylméthyle) dissous dans du camphre - cétal de 2,2,4-triméthylpentane-1,3-diol à titre de premier solvant, comme premier composant de mélange et
- poly(méthacrylate de butylméthyle) dissous dans de l'éther méthylique de 5-nonyle à titre de deuxième solvant, comme deuxième composant de mélange,
procédé dans lequel
- la pâte à braser active déposée est chauffée dans un réacteur à des températures augmentant d'environ 1,5 K/min jusqu'à atteindre environ 400°C et est maintenue à cette température jusqu'à ce que le solvant soit évaporé et le polymère soit entièrement décomposé, et
- ensuite le corps en céramique/oxyde d'aluminium et le corps métallique sont soumis à un brasage fort dans le réacteur à environ 900°C sous vide élevé.
